# FASCICULE DE BREVET EUROPEEN

(11) **EP 4 124 519 B1**
(45) Date de publication et mention de la délivrance du brevet: **23.10.2024**
(21) Numéro de dépôt: 22187092.6
(22) Date de dépôt: 26.07.2022
(51) Int. Cl.: B60S 1/40, B60S 1/38

(54) **ADAPTATEUR POUR BALAI D ESSUYAGE DE VÉHICULE**
ADAPTER FÜR WISCHBLATT EINES FAHRZEUGS
ADAPTER FOR A WIPER BLADE OF A VEHICLE

(30) Priorité: 30.07.2021 FR 2108307
(43) Date de publication de la demande: 01.02.2023
(73) Titulaire: Valeo Systèmes d'Essuyage, 78322 Le Mesnil Saint Denis (FR)
(72) Inventeur: HOUSSAT, Stephane, 78322 LE MESNIL SAINT DENIS (FR); GAUCHER, Vincent, 78322 LE MESNIL SAINT DENIS (FR); POTON, Eric, 78322 LE MESNIL SAINT DENIS (FR)
(74) Mandataire: Valeo Visibility

(56) Documents cités:
- EP-A1- 3 168 092
- WO-A1-2020/135959
- WO-A1-2022/058348

## Description

La présente invention concerne le domaine des essuie-glaces pour véhicule, et plus particulièrement les dispositifs de connexion permettant de connecter un balai d'essuyage à un bras d'entraînement.

Les systèmes d'essuyage pour véhicule sont conçus pour retirer, par balayage, les liquides et salissures qui pourraient perturber la vision d'un conducteur. Ces systèmes d'essuyage comprennent en général un bras d'entraînement, qui effectue un mouvement de va-et-vient angulaire, et des balais d'essuyage allongés équipés de lames racleuses réalisées en une matière élastique. La lame racleuse frotte contre le pare-brise et évacue ces liquides et salissures en les balayant en dehors du champ de vision du conducteur.

Le balai d'essuyage est rattaché au bras d'entraînement par un dispositif de connexion qui comprend un connecteur et un adaptateur. Le connecteur est une pièce qui est solidarisée au balai d'essuyage et qui est en général solidaire de la lame racleuse. L'adaptateur est une pièce qui est interposée entre le bras d'entraînement et le connecteur, en étant conformé pour s'engager dans une pièce terminale du bras d'entraînement. Connecteur et adaptateur coopèrent ensuite pour permettre la liaison articulée et la fixation du balai d'essuyage sur le bras d'entraînement, formant ainsi le dispositif de connexion du balai d'essuyage au bras d'entraînement.

La liaison articulée entre le connecteur et l'adaptateur comprend au moins un axe transversal de pivotement du connecteur vis-à-vis de l'adaptateur, qui est également un axe de pivotement du balai d'essuyage vis-à-vis du bras d'entraînement. L'un des organes, par exemple le connecteur, comprend en général une forme sensiblement cylindrique qui forme un pivot et qui est reçue dans un logement de forme complémentaire de l'autre organe, ici l'adaptateur.

L'adaptateur est relié au bras d'entraînement par l'intermédiaire d'un arbre de ce bras d'entraînement, qui traverse l'adaptateur de part en part en passant par des ouvertures disposées sur des parois latérales de cet adaptateur.

Le document WO2022058348A1 (état de la technique selon l'art. 54 (3) CBE) décrit un exemple d'un tel adaptateur. Le document WO-A-2020/135959 montre un adaptateur de l'état de la technique.

Lors de l'utilisation du système d'essuyage, il est possible qu'un pivotement ou glissement existe entre l'adaptateur et le bras d'entraînement. Un tel pivotement ou glissement perturbe le mouvement du balai d'essuyage, et dégrade ainsi la qualité du balayage du pare-brise du véhicule.

On cherche donc à éviter un tel pivotement ou glissement entre l'adaptateur et le bras d'entraînement. Pour ce faire, l'une des solutions est de générer un arc-boutement entre l'arbre du bras d'entraînement et l'ouverture de l'adaptateur le recevant.

La présente invention s'inscrit dans ce contexte en proposant un adaptateur permettant de générer un arc-boutement entre l'arbre du bras d'entraînement et un organe de pivotement disposé sur une paroi latérale de l'adaptateur, l'arbre du bras d'entraînement étant à cet effet calé au sein de cet organe de pivotement.

Un objet de la présente invention concerne ainsi un adaptateur destiné à relier un balai d'essuyage à un bras d'entraînement pour véhicule via un connecteur, présentant une première paroi latérale et une deuxième paroi latérale entre lesquelles est disposée une paroi supérieure, au moins l'une de ces parois latérales comprenant un organe de pivotement destiné à autoriser une rotation de l'adaptateur par rapport au connecteur, l'organe de pivotement comportant au moins un trou configuré pour recevoir un arbre du bras d'entraînement. Selon l'invention, cet organe de pivotement comprend au moins un organe de blocage apte à bloquer un pivotement entre l'arbre du bras d'entraînement et l'adaptateur au sein du trou.

L'organe de blocage est par exemple au moins une nervure qui fait saillie dans le trou, une série de plots ou de secteurs qui font eux aussi saillie dans le trou.

L'adaptateur participe donc à relier le balai d'essuyage au bras d'entraînement, par l'intermédiaire du connecteur qui est solidaire du balai d'essuyage. L'adaptateur est assemblé sur ce connecteur par emboîtement et le dispositif de connexion ainsi formé peut recevoir le bras d'entraînement, ce dispositif de connexion comportant ici au moins un trou configuré pour recevoir un arbre de ce bras d'entraînement.

L'organe de pivotement peut notamment comprendre une bague de pivotement. Le trou, qui est disposé sur l'une des parois latérales de l'adaptateur, avantageusement au centre de la bague de pivotement, forme un cylindre de réception ménagé dans l'épaisseur de cette paroi latérale, ce cylindre de réception étant avantageusement de section circulaire. Le trou présente au moins une nervure apte à bloquer un pivotement entre l'arbre du bras d'entraînement et l'adaptateur, cette nervure permettant de caler l'arbre du bras d'entraînement au sein de l'organe de pivotement, et plus particulièrement au sein du trou.

Selon une caractéristique de l'invention, l'organe de blocage comprend au moins une nervure ménagée sur une surface délimitant le trou.

Selon une autre caractéristique de l'invention, l'organe de blocage comprend au moins trois nervures séparées les unes des autres par un secteur angulaire de 120°. Lorsque l'organe de blocage présente trois nervures, celles-ci peuvent être équiréparties sur une surface délimitant le trou et elles sont alors séparées par des secteurs angulaires de 120°. Le nombre de nervures peut être un multiple de trois ; on peut par exemple envisager un adaptateur selon l'invention comprenant six nervures, ou encore douze nervures, disposées de façon régulière au sein du trou. On entend par « au sein du trou » que les nervures, quel que soit leur nombre, sont formées sur la surface qui délimite le trou, en s'étendant dans l'épaisseur de la paroi latérale qui porte le trou.

Selon une autre caractéristique de l'invention, l'au moins une nervure s'étend parallèlement à un axe du trou configuré pour recevoir l'arbre du bras d'entraînement. Les nervures s'étendent donc selon une direction dans laquelle s'étend également l'arbre du bras d'entraînement. Cette direction est perpendiculaire à une direction longitudinale ou direction d'allongement de l'adaptateur. Alternativement, les nervures peuvent s'étendent transversalement à l'axe du trou, ou selon une spirale enroulée autour de l'axe du trou.

Selon une caractéristique, la paroi latérale porteuse du trou est délimitée par une face interne et une face externe, et au moins une des nervures s'étend de manière continue de la face interne à la face externe de la paroi latérale. L'au moins une nervure s'étend ainsi sur toute l'épaisseur de la paroi latérale, qui est délimitée à une première extrémité par la face interne et à une deuxième extrémité par la face externe.

Selon une autre caractéristique, l'organe de blocage, notamment au moins une nervure, fait saillie d'une surface délimitant le trou. L'organe de blocage s'étend ainsi dans le trou et à partir de la surface délimitant ce trou. On comprend que cette surface délimitant le trou correspond à l'épaisseur de la paroi latérale telle que décrite précédemment. L'au moins une nervure fait saillie de cette paroi, c'est-à-dire qu'elle s'étend à partir de celle-ci et au-delà de celle-ci en direction d'un centre du trou. La nervure peut par exemple faire saillie de 0,05 centimètre sur la paroi délimitant le trou.

Selon une caractéristique de l'invention, la première paroi latérale est pourvue du trou configuré pour recevoir l'arbre du bras d'entraînement, la deuxième paroi latérale comprenant un orifice aligné sur un axe du trou et qui présente une section de forme parallélépipédique. L'adaptateur comprend ainsi deux ouvertures, alignées selon un même axe de réception du bras d'entraînement : un trou, disposé sur la première paroi latérale, et un orifice, disposé sur la deuxième paroi latérale. Le trou est de forme sensiblement circulaire, tandis que l'orifice présente une section parallélépipédique. Le bras d'entraînement traversant l'adaptateur de part en part, il traverse à la fois le trou et l'orifice.

L'invention concerne également un dispositif de connexion pour véhicule, destiné à relier un balai d'essuyage à un bras d'entraînement, comprenant au moins un connecteur configuré pour être rendu solidaire du balai d'essuyage et au moins un adaptateur tel que décrit précédemment.

Selon une caractéristique, le connecteur comprend un palier qui reçoit l'organe de pivotement. Ce palier participe à la fonction pivotement, la bague de pivotement de l'adaptateur étant configurée pour s'emboîter dans le palier du connecteur selon un assemblage de type mâle-femelle.

Selon une autre caractéristique de l'invention, le connecteur comprend un anneau qui fait saillie d'une face latérale du connecteur, l'anneau étant logé dans l'orifice de la deuxième paroi latérale de l'adaptateur. De la même façon que pour la bague de pivotement et le palier, cet anneau est destiné à s'emboîter dans l'orifice de la deuxième paroi latérale de l'adaptateur selon un assemblage mâle-femelle, de manière à participer à la mise en oeuvre de la fonction de pivotement entre l'adaptateur et le connecteur.

On comprend ainsi que l'invention interdit toute rotation entre le trou et l'arbre du bras d'entraînement, le pivotement nécessaire au bon fonctionnement du balayage étant mis en oeuvre par l'organe de pivotement qui autorise un pivotement de l'adaptateur par rapport au connecteur.

L'invention concerne par ailleurs un balai d'essuyage comprenant un adaptateur ou un dispositif de connexion tels que décrits ci-dessus. Pour ce qui est du balai d'essuyage comprenant un adaptateur tel que décrit, l'invention peut viser un emballage qui porte ou reçoit un balai d'essuyage et un tel adaptateur, que celui-ci soit assemblé ou non sur le balai d'essuyage.

L'invention porte par ailleurs sur un système d'essuyage comprenant un bras d'entraînement porteur d'un balai d'essuyage tel que décrit précédemment, le balai d'essuyage étant relié au bras d'entraînement par l'intermédiaire du dispositif de connexion, l'adaptateur étant bloqué en rotation et en translation par rapport au bras d'entraînement par l'organe de blocage, l'adaptateur étant monté pivotant par rapport au connecteur via au moins l'organe de pivotement. On entend par « étant bloqué en rotation et en translation » le fait que le balai d'essuyage demeure immobile par rapport au bras d'entraînement, c'est-à-dire que la rotation autour d'un axe de l'arbre du bras d'entraînement et la translation de long de cet axe sont empêchées tant qu'un effort inférieur à 30 Nm est exercé en translation entre le balai d'essuyage et le bras d'entraînement. On évite ainsi tout glissement en fonctionnement entre l'arbre du bras d'entraînement et l'adaptateur. On peut ainsi considérer que l'effort pour introduire l'adaptateur sur l'arbre du bras, lors du montage du balai d'essuyage, est compris entre 10 Nm et 30 Nm.

Selon une caractéristique de ce système d'essuyage, le bras d'entraînement comporte un organe de verrouillage participant à la solidarisation du bras d'entraînement au dispositif de connexion, cet organe de verrouillage s'étendant au moins en partie perpendiculairement à l'un des flancs latéraux du bras d'entraînement et comprenant au moins un bord plié, et il est prévu un jeu mesuré entre le bord plié de l'organe de verrouillage et la première paroi latérale de l'adaptateur, un tel jeu étant de valeur non-nulle.

Cet organe de verrouillage s'étend perpendiculairement à l'un des flancs latéraux du bras d'entraînement, c'est-à-dire sensiblement perpendiculairement à une direction longitudinale ou direction d'allongement du bras d'entraînement. L'organe de verrouillage comprend, à l'une de ses extrémités qui se trouve à distance du bras d'entraînement, un bord plié. L'organe de verrouillage est destiné à couvrir le dispositif de connexion, le bord plié étant au regard de la deuxième paroi latérale de l'adaptateur, ce dernier et le bras d'entraînement étant disposés côte à côte.

Il existe un jeu mesuré entre le bord plié de l'organe de verrouillage et la première paroi latérale de l'adaptateur qui porte le trou équipé de l'organe de blocage. Selon l'invention, ce jeu est de valeur non nulle. Un tel jeu participe à empêcher le pivotement entre l'adaptateur et le bras d'entraînement.

D'autres caractéristiques, détails et avantages de l'invention ressortiront plus clairement à la lecture de la description qui suit d'une part, et d'un exemple de réalisation donné à titre indicatif et non limitatif en référence aux dessins annexés d'autre part, sur lesquels :
[Fig. 1] présente, schématiquement, une vue en perspective d'un système d'essuyage dans lequel un adaptateur selon l'invention participe à relier un balai d'essuyage à un bras d'entraînement ;
[Fig. 2] est une vue de côté en perspective de l'adaptateur de la figure 1 ;
[Fig. 3] illustre l'adaptateur de la figure 2 selon une vue en perspective d'un autre côté ;
[Fig. 4] montre schématiquement le trou de la figure 2, ce trou étant représenté en perspective ;
[Fig. 5] présente une coupe du trou de la figure 2 accueillant ici un arbre de bras d'entraînement ;
[Fig. 6] est une vue de coupe en perspective d'un dispositif de connexion selon l'invention comprenant l'adaptateur de la figure 1 associé à un connecteur ;
[Fig. 7] est une vue de dessus du dispositif de connexion de la figure 6 comprenant l'adaptateur selon l'invention, assemblé à un bras d'entraînement.

Sur les figures, les éléments communs à plusieurs figures conservent la même référence.

Dans la description détaillée qui va suivre, les dénominations « longitudinale », « transversale » et « verticale » se réfèrent à l'orientation de l'adaptateur selon l'invention. Une direction longitudinale correspond à une direction principale d'allongement de cet adaptateur, cette direction longitudinale étant parallèle à un axe longitudinal L d'un repère L, V, T illustré sur les figures. Une direction transversale correspond à une direction le long de laquelle s'étend l'arbre du bras d'entraînement, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

En outre, les dénominations « inférieure » et « supérieure » concernant les éléments de l'adaptateur s'entendent relativement à l'éloignement de ces éléments de l'organe de verrouillage du bras d'entraînement, une extrémité supérieure de tels éléments correspondant à l'extrémité disposée au voisinage de cet organe de verrouillage tandis qu'une extrémité inférieure correspond à l'extrémité disposée à distance de l'organe de verrouillage.

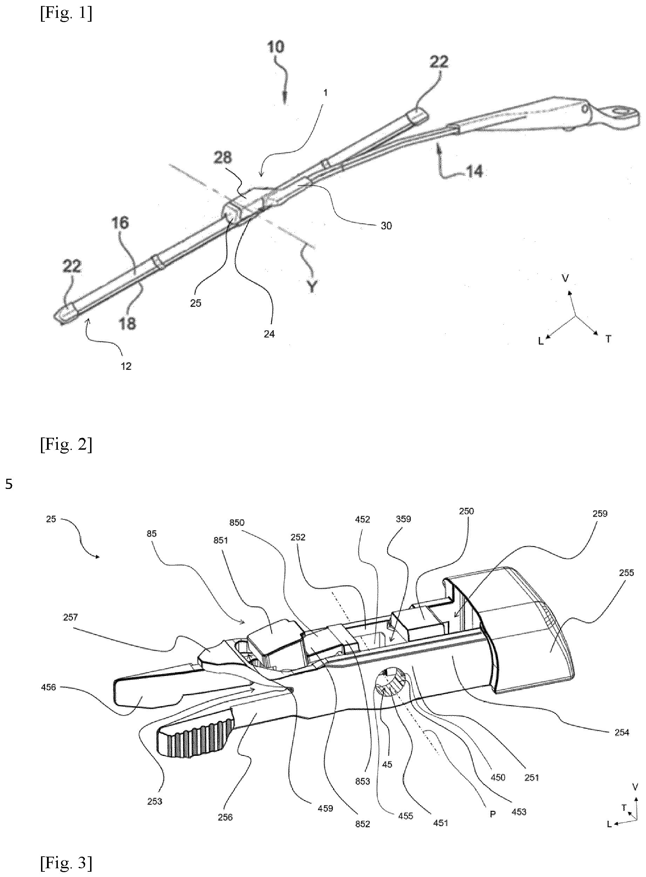

La figure 1 illustre ainsi un système d'essuyage 10 selon l'invention, comportant un balai d'essuyage 12 et un bras d'entraînement 14 du balai d'essuyage 12. Le balai d'essuyage 12 comprend un corps longitudinal 16, une lame d'essuyage 18, en général en caoutchouc, et au moins une vertèbre, non visible, qui rigidifie la lame d'essuyage 18 et favorise son application sur un pare-brise de véhicule.

Le balai d'essuyage 12 schématiquement représenté comprend en outre des embouts d'extrémité ou agrafes d'accrochage 22 de la lame d'essuyage 18 et de la vertèbre sur le corps longitudinal 16, ces embouts d'extrémité 22 étant situés à chacune des extrémités longitudinales du corps longitudinal 16.

Le balai d'essuyage 12 porte, sensiblement en son milieu, un dispositif de connexion 1 selon l'invention. Ce dispositif de connexion 1 comprend notamment un connecteur 24, et un adaptateur 25 selon l'invention.

Cet adaptateur 25 participe à relier le connecteur 24 à un bras d'entraînement 14. L'adaptateur 25 est monté sur le connecteur 24 de façon à garder un degré de liberté en pivotement autour d'un axe d'articulation Y qui est un axe transversal sensiblement perpendiculaire à l'axe longitudinal du balai d'essuyage 12. Ce degré de liberté autorise un pivotement du balai d'essuyage 12 vis-à-vis du bras d'entraînement 14 et permet ainsi au balai d'essuyage 12 de suivre la courbure du pare-brise lors de ses déplacements.

Le bras d'entraînement 14 est entraîné par un moteur, non représenté, pour suivre un mouvement angulaire de va-et-vient permettant d'évacuer l'eau, et éventuellement d'autres éléments indésirables recouvrant le pare-brise. L'adaptateur 25 assure la liaison du balai d'essuyage 12 au bras d'entraînement 14. Plus particulièrement, ils participent à la liaison d'une tête ou chape 28 du bras d'entraînement 14, qui peut être formée d'un seul tenant avec le bras d'entraînement 14 ou encore être rapportée et fixée sur une tige de celui-ci.

La chape 28 a une forme allongée selon une direction générale sensiblement parallèle à la direction longitudinale du balai d'essuyage 12. La chape 28 se prolonge, à l'une de ses extrémités longitudinales, par une partie de liaison 30 à la tige du bras d'entraînement 14.

Les figures 2 et 3 présentent des vues en perspective de l'adaptateur 25 de la figure 1, selon des vues de côté opposées. L'adaptateur 25 s'étend principalement selon la direction longitudinale, et présente une section transversale sensiblement en forme de U. Cet adaptateur 25 présente un corps 254 qui comprend une première paroi latérale 251 et une deuxième paroi latérale 252 sensiblement parallèles entre elles, à distance l'une de l'autre. Ces parois 251, 252 sont reliées entre elles par une paroi supérieure 250 qui leur est sensiblement perpendiculaire. Les parois 250, 251, 252 de cet adaptateur 25 présentent une forme allongée selon la direction longitudinale, et elles définissent entre elles un logement interne 253 destiné à accueillir le connecteur 24.

À une de ses extrémités longitudinales, le corps 254 de l'adaptateur 25 est relié à une tête 255, dont les dimensions verticales et transversales sont supérieures à celles du corps 254 de l'adaptateur 25. On comprend ainsi que la tête 255 s'étend au-delà d'un plan longitudinal et transversal dans lequel s'étend la paroi supérieure 250, et au-delà d'un plan longitudinal et vertical dans lequel s'étendent les parois latérales 251 et 252. La tête 255 est notamment un moyen de verrouillage. En effet, lorsque le balai d'essuyage 12 est assemblé sur le bras d'entraînement 14 par l'intermédiaire du dispositif de connexion 1 comme illustré sur la figure 1, cette tête 255 forme une butée pour la chape 28 du bras d'entraînement 14, empêchant ainsi la translation de celle-ci au-delà du corps 254 de l'adaptateur 25.

À une autre de ses extrémités longitudinales, la paroi supérieure 250 de l'adaptateur 25 se rétrécit de façon à former une pointe 257, qui est en porte-à-faux par rapport au corps 254. Au niveau de cette autre extrémité longitudinale, le corps 254 de l'adaptateur 25 et plus particulièrement les parois latérales 251, 252 se poursuivent chacune par une jambe 256 déformable élastiquement. Ces jambes 256 peuvent ainsi être rapprochées l'une de l'autre par déformation élastique. Les jambes 256 sont sensiblement symétriques selon un selon un plan de symétrie s'étendant dans des directions longitudinale et verticale, situé à équidistance de la première paroi latérale 251 et de la deuxième paroi latérale 252. Chaque jambe 256 présente en outre une portion de verrouillage 456, conformée pour coopérer avec des encoches disposées sur la chape 28 de bras d'entraînement 14 afin de verrouiller l'assemblage de l'adaptateur 25 avec cette dernière, constituant ainsi un autre moyen de verrouillage.

La paroi supérieure 250 est percée d'une première ouverture 259, une deuxième ouverture 359 et une troisième ouverture 459, alignées selon la direction longitudinale et donnant sur le logement interne 253. La troisième ouverture 459, qui est au voisinage des jambes 256, est en partie recouverte par un organe de verrouillage 85. Cet organe de verrouillage 85 comprend notamment une languette souple 850 et un bouton poussoir 851. Cette languette 850 s'étend principalement selon la direction longitudinale et présente une extrémité fixe 853 à distance des jambes 256, qui est reliée à la paroi latérale 251 et à la paroi latérale 252 par un pontet, et une extrémité libre 852, mobile, au voisinage des jambes 256. La languette 850 est déformable élastiquement, et son extrémité libre 852 porte le bouton poussoir 851.

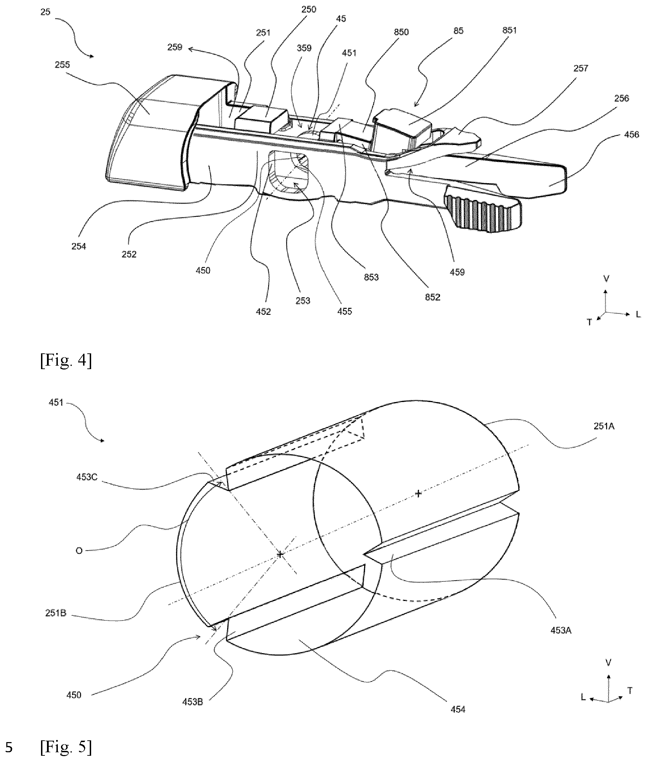

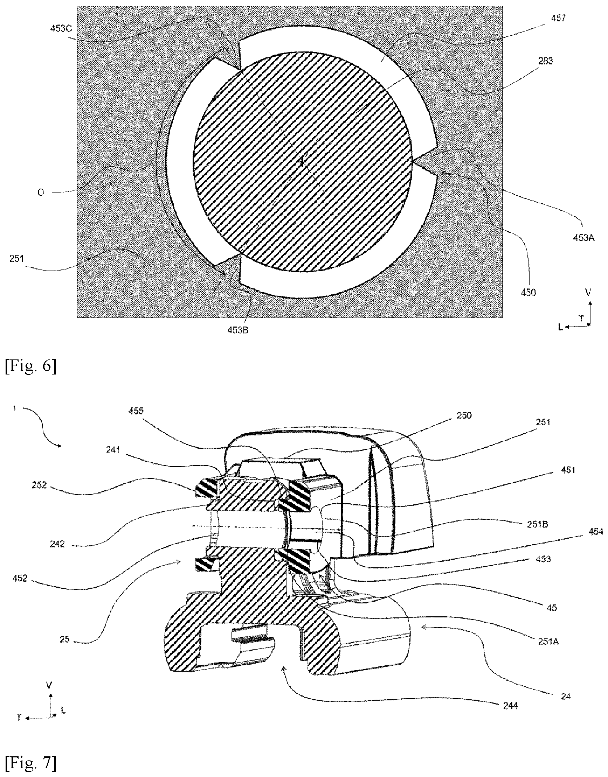

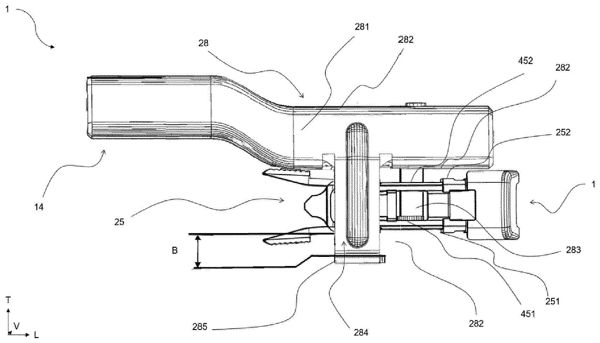

La première paroi latérale 251 est équipée d'un organe de pivotement 45, destiné à autoriser une rotation de l'adaptateur 25 par rapport au connecteur 24. Cet organe de pivotement 45 comporte une bague de pivotement 455. Dans la première paroi latérale 251 est ménagé un trou traversant 451, de forme sensiblement circulaire, ce trou 451 étant configuré pour recevoir un arbre 283 du bras d'entraînement 14, tel que représenté aux figures 5 et 7.

La deuxième paroi latérale 252 est quant à elle équipée d'un orifice traversant 452, de forme sensiblement parallélépipédique, qui est aligné sur l'axe du trou 451. Le trou 451 et l'orifice 452 sont ouverts sur le logement interne 253. Lorsque l'adaptateur 25 est assemblé au bras d'entraînement 14, l'arbre 283 de ce bras d'entraînement 14 traverse l'adaptateur 25 de part en part, en passant à la fois par l'organe de pivotement 45 et plus particulièrement par le trou 451 de la première paroi latérale, et par l'orifice 452 de la deuxième paroi latérale 252. L'arbre 283 du bras d'entraînement 14 est au contact du trou 451 mais pas de l'orifice 452, bien qu'il traverse à la fois ce trou 451 et cet orifice 452. Ce trou 451 et cet orifice 452 sont traversés par un axe de pivotement P de l'adaptateur 25 relativement au connecteur 24, représenté en figure 6, et par extension du balai d'essuyage 12 relié à l'adaptateur 25 relativement au bras d'entraînement 14 relié au connecteur 24.

Selon l'invention, le trou 451 présente au moins un organe de blocage 450 qui peut par exemple prendre la forme d'une nervure 453 apte à bloquer un pivotement et une translation entre l'arbre 283 du bras d'entraînement 14 et l'adaptateur 25.

Les figures 4 et 5 sont des représentations schématiques de ce trou 451. Selon le mode de réalisation représenté, le trou 451 présente trois nervures 453, ici référencées 453A, 453B et 453C, qui sont circonférentiellement équiréparties et sont donc séparées les unes des autres par un secteur angulaire de 120°. Le nombre et la position des nervures équipant le trou 451 peut cependant différer selon les modes de réalisation et peut notamment être un autre multiple de deux ou de trois. La première paroi latérale 251 qui porte le trou 451 est délimitée transversalement par une face interne 251A et une face externe 251B, ces faces 251A et 251B délimitant également une surface 454 qui délimite le trou 451. On comprend que cette surface 454 est formée par l'épaisseur de la première paroi latérale 251 de l'adaptateur 25. Le trou 451 forme ainsi un cylindre de réception, avantageusement de section circulaire, formé dans l'épaisseur de la première paroi latérale 251.

Les nervures 453 s'étendent de manière continue depuis la face interne 251A jusqu'à la face externe 251B de la paroi latérale concernée, et courent donc sur toute l'épaisseur de la première paroi latérale 251. Ces nervures 453 font saillie de la surface 454, et s'étendent donc à partir de celle-ci. Une telle saillie peut par exemple être de 0,05 centimètre, ce qui signifie que les nervures 453 dépassent de 0,05 centimètre de la surface 454. Les nervures 453 s'étendent de façon parallèle à l'axe du trou 451 configuré pour recevoir l'arbre 283 du bras d'entraînement 14, tel que visible en figure 4. Les nervures 453 faisant saillie de la surface 454, lorsque l'arbre 283 du bras d'entraînement 14 est inséré au sein du trou 451 cet arbre 283 n'est pas au contact de cette surface 454, à l'exception des nervures 453. On comprend ainsi qu'à l'exception des nervures 453 sur lequel l'arbre 283 du bras d'entraînement 14 repose, il existe un espacement 457 entre la surface 454 et l'arbre 283, cet espacement 457 étant représenté en figure 5.

Lorsque l'arbre 283 du bras d'entraînement 14 est inséré par translation dans le trou 451 de la première paroi latérale 251, les nervures 453 se déforment. Elles constituent une surface de contact ou point d'ancrage avec l'arbre 283 et permettent ainsi un ajustement serré de celui-ci au sein de l'adaptateur 25. Ce point d'ancrage et cet ajustement serré participent à la formation d'un arc-boutement, qui contribuent à empêcher le pivotement ou glissement de l'arbre 283 du bras d'entraînement 14 par rapport à l'adaptateur 25, ainsi que leur translation respective tant que l'effort généré le long de cette translation est inférieur à 30 Nm, ce qui est supérieur aux efforts mis en jeu quand le système d'essuyage est en fonctionnement.

La figure 6 illustre le dispositif de connexion 1 selon l'invention, ce dispositif de connexion 1 étant destiné à relier le balai d'essuyage 12 au bras d'entraînement 14. Ce dispositif de connexion 1 comporte l'adaptateur 25 qui peut être relié au bras d'entraînement 14, et le connecteur 24 qui peut être solidaire du balai d'essuyage 12. Ce balai d'essuyage 12 s'insère dans le logement 244 du connecteur 24, ce logement 244 étant est apte à le recevoir.

Le connecteur 24 et l'adaptateur 25 sont imbriqués l'un dans l'autre de sorte à former un ensemble, dissociable, correspondant au dispositif de connexion 1. On comprend ainsi que les éléments du dispositif de connexion 1 sont assemblés de façon amovible, c'est-à-dire qu'ils peuvent être tour à tour associés et dissociés sans être détériorés. À cet effet, le connecteur 24 comprend, sur l'un de ses pans latéraux qui est au regard de la première paroi latérale 251, un palier 241 qui reçoit l'organe de pivotement 45 et plus particulièrement la bague de pivotement 455. Ce palier 241 correspond ainsi à un alésage dans le pan latéral du connecteur 24. La bague de pivotement 455, qui fait saillie sur la face interne 251A de la première paroi latérale 251, est ainsi enchâssée dans le palier 241 selon un assemblage mâle-femelle.

Le connecteur 24 présente, sur un pan latéral opposé selon la direction transversale au pan latéral qui porte le palier 241, un anneau 242 qui participe également à l'assemblage du connecteur 24 avec l'adaptateur 25. Cet anneau 242, qui correspond à un épaulement, fait saillie du pan latéral du connecteur 24. L'anneau 242 est logé dans l'orifice 452 de la deuxième paroi latérale 252 de l'adaptateur 25, également selon un assemblage mâle-femelle.

L'adaptateur 25 et le connecteur 24 peuvent ainsi pivoter grâce à une coopération entre leurs éléments, c'est-à-dire grâce à une coopération de la bague de pivotement 455 de l'organe de pivotement 45 pour l'adaptateur 25, et du palier 241 et de l'anneau 242 pour le connecteur 24. Lorsque, dans un système d'essuyage 10 selon l'invention, le balai d'essuyage 12 est relié au bras d'entraînement 14 par le biais d'un dispositif de connexion 1, l'adaptateur 25 est donc monté pivotant par rapport au connecteur 24. L'organe de pivotement 45 assure en effet le rôle de liaison pivot. Ainsi, lorsque le connecteur 24 est solidaire d'un balai d'essuyage 12, par exemple par sertissage, ce balai d'essuyage 12 peut pivoter par rapport à l'adaptateur 25 et au bras d'entraînement 14 auquel cet adaptateur 25 est relié. De ce fait, le balai d'essuyage 12 peut lors de ses déplacements suivre parfaitement la surface courbée du pare-brise du véhicule qu'il équipe.

À l'inverse, le pivotement ou glissement du bras d'entraînement 14 par rapport à l'adaptateur 25 est bloquée par l'organe de blocage 450, notamment au moins une nervure 453, cette nervure 453 calant l'arbre 283 du bras d'entraînement 14 au sein de l'organe de pivotement 45 et plus particulièrement au sein du trou 451 de la première paroi latérale 251. Lors du fonctionnement du système d'essuyage 10 comme illustré en figure 1, un effet d'arc-boutement se produit, empêchant ainsi le pivotement ou glissement tel que décrit précédemment.

La figure 7 illustre le dispositif de connexion 1 comprenant l'adaptateur 25 selon l'invention, ce dispositif de connexion 1 étant assemblé au bras d'entraînement 14.

Ce bras d'entraînement 14 comprend une chape 28 formée dans la partie terminale du bras d'entraînement 14. Cette chape 28 se compose notamment d'une paroi supérieure 281, s'étendant selon la direction longitudinale du bras d'entraînement 14, cette paroi supérieure 281 étant bordée de deux flancs latéraux 282 qui lui sont perpendiculaires. Afin d'assembler l'adaptateur 25 et de façon plus générale le dispositif de connexion 1 au bras d'entraînement 14, ce dernier présente un organe de verrouillage 284. Un tel organe de verrouillage 284 prend la forme d'une patte, qui s'étend perpendiculairement à l'un des flancs latéraux 282 du bras d'entraînement 14, notamment en s'étendant dans un plan confondu avec un plan d'extension de la paroi supérieure 281 de la chape 28. Cet organe de verrouillage 284 comprend, à l'une des extrémités de la patte qui se trouve à distance du bras d'entraînement 14, un bord plié 285. Ce bord plié s'étend dans un plan globalement parallèle au plan d'extension d'au moins un de flancs latéraux 282 de la chape 28.

Lors de l'association du dispositif de connexion 1 comprenant l'adaptateur 25 et le connecteur 24 au bras d'entraînement 14, ce dispositif de connexion 1 est pivoté d'environ 45° de façon que l'arbre 283 s'insère transversalement et en force dans le trou 451 de l'adaptateur 25, puis il est aligné selon la direction longitudinale par pivotement du balai d'essuyage au moyen de l'organe de pivotement de l'adaptateur.

L'arbre 283 du bras d'entraînement 14 traverse alors le dispositif de connexion 1 et notamment l'adaptateur 25 de part en part, c'est-à-dire depuis sa première paroi latérale 251 à sa deuxième paroi latérale 252, et s'étend au-delà des plans longitudinaux-verticaux dans lesquels s'étendent ces parois latérales 251 et 252. L'organe de verrouillage 284 enserre le dispositif de connexion 1, assurant sa solidarisation avec le balai d'essuyage 12. À cet effet, le bord plié 285 vient au regard de la deuxième paroi latérale 252 de l'adaptateur 25, ce dernier et le bras d'entraînement 14 étant alignés selon la direction transversale.

Lorsque l'adaptateur 25 et le bras d'entraînement 14 sont ainsi associés, une première distance mesurée entre la première paroi latérale 251 et la deuxième paroi latérale 252 est inférieure à une deuxième distance mesurée entre le flanc latéral 282 du bras d'entraînement 14 à partir duquel s'étend l'organe de verrouillage 284 et le bord plié 285 de l'organe de verrouillage 284. On comprend ainsi qu'il existe un jeu, le jeu B, entre le bord plié 285 de l'organe de verrouillage 284 et la première paroi latérale 251 de l'adaptateur 25 qui porte le trou 451. Selon l'invention, ce jeu B est de valeur non nulle. Un tel jeu n'affecte pas la liaison mécanique entre l'adaptateur 25 et le bras d'entraînement 14, puisque celle-ci est assurée grâce au montage serré de l'arbre 283 du bras d'entraînement dans le trou 451 portant l'organe de blocage 450 sur l'adaptateur 25.

La présente invention propose ainsi un adaptateur présentant au moins une nervure, au sein duquel cette nervure génère un arc-boutement d'un arbre d'un bras d'entraînement, bloquant ainsi le pivotement et la translation entre le bras d'entraînement et l'adaptateur.

## Revendications

1. Adaptateur (25) destiné à relier un balai d'essuyage (12) à un bras d'entraînement (14) pour véhicule via un connecteur (24), présentant une première paroi latérale (251) et une deuxième paroi latérale (252) entre lesquelles est disposée une paroi supérieure (250), au moins l'une de ces parois latérales (251) comprenant un organe de pivotement (45) destiné à autoriser une rotation de l'adaptateur (25) par rapport au connecteur (24), l'organe de pivotement (45) comportant au moins un trou (451) configuré pour recevoir un arbre (283) du bras d'entraînement (14), **caractérisé en ce que** l'organe de pivotement (45) comprend au moins un organe de blocage (450) apte à bloquer un pivotement entre l'arbre (283) du bras d'entraînement (14) et l'adaptateur (25) au sein du trou (451).

2. Adaptateur (25) selon la revendication précédente, dans lequel l'organe de blocage (450) comprend au moins une nervure (453) ménagée sur une surface (454) délimitant le trou (451).

3. Adaptateur (25) selon la revendication précédente, dans lequel l'organe de blocage (450) comprend au moins trois nervures (453A, 453B, 453C) séparées les unes des autres par un secteur angulaire (O) de 120°.

4. Adaptateur (25) selon l'une quelconque des revendications précédentes, dans lequel l'au moins une nervure (453) s'étend parallèlement à un axe du trou (451) configuré pour recevoir l'arbre (283) du bras d'entraînement (14).

5. Adaptateur (25) selon l'une quelconque des revendications précédentes, dans lequel la paroi latérale (251) porteuse du trou (451) est délimitée par une face interne (251A) et une face externe (251B), et au moins une des nervures (453) s'étend de manière continue de la face interne (251A) à la face externe (251B) de la paroi latérale (251).

6. Adaptateur (25) selon l'une quelconque des revendications précédentes, dans lequel au moins une nervure (453) fait saillie d'une surface (454) délimitant le trou (451).

7. Adaptateur (25) selon l'une quelconque des revendications précédentes, dans lequel la première paroi latérale (251) est pourvue du trou (451) configuré pour recevoir l'arbre (283) du bras d'entraînement (14), la deuxième paroi latérale (252) comprenant un orifice (452) aligné sur un axe du trou (451) et qui présente une section de forme parallélépipédique.

8. Dispositif de connexion (1) pour véhicule, destiné à relier un balai d'essuyage (12) à un bras d'entraînement (14), comprenant au moins un connecteur (24) configuré pour être rendu solidaire du balai d'essuyage (12) et au moins un adaptateur (25) selon l'une quelconque des revendications précédentes.

9. Dispositif de connexion (1) selon la revendication précédente, dans lequel le connecteur (24) comprend un palier (241) qui reçoit l'organe de pivotement (45).

10. Dispositif de connexion (1) selon les revendications 8 ou 9, dans lequel le connecteur (24) comprend un anneau (242) qui fait saillie d'une face latérale du connecteur (24), l'anneau (242) étant logé dans l'orifice (452) de la deuxième paroi latérale (252) de l'adaptateur (25).

11. Balai d'essuyage (12) comprenant un adaptateur (25) selon l'une quelconque des revendications 1 à 7 ou un dispositif de connexion (1) selon l'une quelconque des revendications 8 à 10.

12. Système d'essuyage (10) comprenant un bras d'entraînement (14) porteur d'un balai d'essuyage (12) selon la revendication précédente, le balai d'essuyage (12) étant relié au bras d'entraînement (14) par l'intermédiaire du dispositif de connexion (1), l'adaptateur (25) étant bloqué en rotation et en translation par rapport au bras d'entraînement (14) par l'organe de blocage (450), l'adaptateur (25) étant monté pivotant par rapport au connecteur (24) via au moins l'organe de pivotement (45).

## Patentansprüche

1. Adapter (25), der dazu bestimmt ist, ein Wischblatt (12) mittels eines Verbindungsstücks (24) mit einem Antriebsarm (14) für ein Fahrzeug zu verbinden, und der eine erste Seitenwand (251) und eine zweite Seitenwand (252) aufweist, zwischen denen eine obere Wand (250) angeordnet ist, wobei mindestens eine dieser Seitenwände (251) ein Schwenkorgan (45) beinhaltet, das dazu bestimmt ist, eine Rotation des Adapters (25) mit Bezug auf das Verbindungsstück (24) zu gestatten, wobei das Schwenkorgan (45) mindestens ein Loch (451) umfasst, das dazu konfiguriert ist, eine Welle (283) des Antriebsarms (14) aufzunehmen, **dadurch gekennzeichnet, dass** das Schwenkorgan (45) mindestens ein Blockierorgan (450) beinhaltet, das dazu fähig ist, ein Schwenken zwischen der Welle (283) des Antriebsarms (14) und dem Adapter (25) innerhalb des Lochs (451) zu blockieren.

2. Adapter (25) nach dem vorhergehenden Anspruch, wobei das Blockierorgan (450) mindestens eine Rippe (453) beinhaltet, die auf einer Oberfläche (454), die das Loch (451) begrenzt, eingerichtet ist.

3. Adapter (25) nach dem vorhergehenden Anspruch, wobei das Blockierorgan (450) mindestens drei Rippen (453A, 453B, 453C) beinhaltet, die jeweils durch einen Winkelbereich (0) von 120° voneinander getrennt sind.

4. Adapter (25) nach einem beliebigen der vorhergehenden Ansprüche, wobei sich die mindestens eine Rippe (453) parallel zu einer Achse des Lochs (451) erstreckt, das dazu konfiguriert ist, die Welle (283) des Antriebsarms (14) aufzunehmen.

5. Adapter (25) nach einem beliebigen der vorhergehenden Ansprüche, wobei die Seitenwand (251), die das Loch (451) trägt, durch eine Innenfläche (251A) und eine Außenfläche (251B) begrenzt wird und sich mindestens eine der Rippen (453) kontinuierlich von der Innenfläche (251A) zu der Außenfläche (251B) der Seitenwand (251) erstreckt.

6. Adapter (25) nach einem beliebigen der vorhergehenden Ansprüche, wobei mindestens eine Rippe (453) von einer Oberfläche (454), die das Loch (451) begrenzt, vorsteht.

7. Adapter (25) nach einem beliebigen der vorhergehenden Ansprüche, wobei die erste Seitenwand (251) über ein Loch (451) verfügt, das dazu konfiguriert ist, die Welle (283) des Antriebsarms (14) aufzunehmen, wobei die zweite Seitenwand (252) eine Öffnung (452) beinhaltet, die auf eine Achse des Lochs (451) ausgerichtet ist und einen Querschnitt mit parallelepipedischer Form aufweist.

8. Verbindungsvorrichtung (1) für ein Fahrzeug, die dazu bestimmt ist, ein Wischblatt (12) mit einem Antriebsarm (14) zu verbinden, und mindestens ein Verbindungsstück (24), das dazu konfiguriert ist, fest mit dem Wischblatt (12) verbunden zu werden, und mindestens einen Adapter (25) nach einem beliebigen der vorhergehenden Ansprüche beinhaltet.

9. Verbindungsvorrichtung (1) nach dem vorhergehenden Anspruch, wobei das Verbindungstück (24) ein Lager (241) beinhaltet, das das Schwenkorgan (45) aufnimmt.

10. Verbindungsvorrichtung (1) nach den Ansprüchen 8 oder 9, wobei das Verbindungsstück (24) einen Ring (242) beinhaltet, der von einer Seitenfläche des Verbindungsstücks (24) vorsteht, wobei der Ring (242) in der Öffnung (452) der zweiten Seitenwand (252) des Adapters (25) untergebracht ist.

11. Wischblatt (12), das einen Adapter (25) nach einem beliebigen der Ansprüche 1 bis 7 oder eine Verbindungsvorrichtung (1) nach einem beliebigen der Ansprüche 8 bis 10 beinhaltet.

12. Wischsystem (10), das einen Antriebsarm (14) beinhaltet, der ein Wischblatt (12) nach dem vorhergehenden Anspruch trägt, wobei das Wischblatt (12) mit Hilfe der Verbindungsvorrichtung (1) mit dem Antriebsarm (14) verbunden ist, wobei der Adapter (25) durch das Blockierorgan (450) mit Bezug auf den Antriebsarm (14) rotatorisch und translatorisch blockiert wird, wobei der Adapter (25) mittels mindestens des Schwenkorgans (45) mit Bezug auf das Verbindungsstück (24) schwenkbar befestigt ist.

## Claims

1. Adapter (25) intended to connect a wiper blade (12) to a driving arm (14) for a vehicle via a connector (24), having a first lateral wall (251) and a second lateral wall (252) between which an upper wall (250) is positioned, at least one of these lateral walls (251) comprising a pivot member (45) intended to allow the adapter (25) to rotate with respect to the connector (24), the pivot member (45) comprising at least one hole (451) configured to receive a shaft (283) of the driving arm (14), **characterized in that** the pivot member (45) comprises at least one immobilizing member (450) able to block pivoting between the shaft (283) of the driving arm (14) and the adapter (25) within the hole (451).

2. Adapter (25) according to the preceding claim, wherein the immobilizing member (450) comprises at least one rib (453) formed on a surface (454) delimiting the hole (451).

3. Adapter (25) according to the preceding claim, wherein the immobilizing member (450) comprises at least three ribs (453A, 453B, 453C) separated from one another by an angular sector (O) of 120°.

4. Adapter (25) according to any one of the preceding claims, wherein at least one rib (453) extends parallel to an axis of the hole (451) configured to accept the shaft (283) of the driving arm (14).

5. Adapter (25) according to any one of the preceding claims, wherein the lateral wall (251) bearing the hole (451) is delimited by an internal face (251A) and an external face (251B), and at least one of the ribs (453) extends continuously from the internal face (251A) to the external face (251B) of the lateral wall (251).

6. Adapter (25) according to any one of the preceding claims, wherein at least one rib (453) projects from the surface (454) delimiting the hole (451).

7. Adapter (25) according to any one of the preceding claims, wherein the first lateral wall (251) is provided with the hole (451) configured to accept the shaft (283) of the driving arm (14), the second lateral wall (252) comprising an orifice (452) aligned on an axis of the hole (451) and which has a cross section of parallelepipedal shape.

8. Connection device (1) for a vehicle, intended for connecting a wiper blade (12) to a driving arm (14), comprising at least a connector (24) configured to be secured to the wiper blade (12) and at least an adapter (25) according to any one of the preceding claims.

9. Connection device (1) according to the preceding claim, wherein the connector (24) comprises a bearing (241) which accepts the pivot member (45).

10. Connection device (1) according to Claim 8 or 9, wherein the connector (24) comprises a ring (242) which projects from a lateral face of the connector (24), the ring (242) being housed in the orifice (452) of the second lateral wall (252) of the adapter (25).

11. Wiper blade (12) comprising an adapter (25) according to any one of Claims 1 to 7 or a connection device (1) according to any one of Claims 8 to 10.

12. Wiping system (10) comprising a driving arm (14) bearing a wiper blade (12) according to the preceding claim, the wiper blade (12) being connected to the driving arm (14) by means of the connection device (1), the adapter (25) being immobilized in terms of rotational and in terms of translational movement with respect to the driving arm (14) by the immobilization member (450), the adapter (25) being mounted with the ability to pivot with respect to the connector (24) via at least the pivot member (45).
